(19) Europäisches Patentamt / European Patent Office / Office européen des brevets

(11) **EP 2 998 639 B1**

(12) **EUROPEAN PATENT SPECIFICATION**

(45) Date of publication and mention
of the grant of the patent:
**04.10.2023 Bulletin 2023/40**

(21) Application number: **14788890.3**

(22) Date of filing: **21.01.2014**

(51) International Patent Classification (IPC):
*F21V 3/00* (2015.01)   *F21V 7/00* (2006.01)
*G02B 19/00* (2006.01)   *F21K 9/61* (2016.01)
*F21K 9/66* (2016.01)   *F21K 9/68* (2016.01)
*F21K 9/69* (2016.01)   *F21Y 115/10* (2016.01)
*F21V 5/04* (2006.01)   *F21K 9/233* (2016.01)
*F21K 9/232* (2016.01)

(52) Cooperative Patent Classification (CPC):
**F21V 5/04; F21K 9/232; F21K 9/61; F21K 9/66;
F21K 9/68; F21K 9/69; F21V 7/0091;
G02B 19/0028; G02B 19/0061;** F21V 3/00;
F21Y 2115/10

(86) International application number:
**PCT/JP2014/051086**

(87) International publication number:
**WO 2014/174859 (30.10.2014 Gazette 2014/44)**

(54) **ILLUMINATOR AND WIDE LIGHT DISTRIBUTION LENS**

BELEUCHTUNGSVORRICHTUNG UND LINSE MIT BREITER LICHTVERTEILUNG

DISPOSITIF D'ÉCLAIRAGE ET LENTILLE DE RÉPARTITION LUMINEUSE LARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2013 JP 2013094491**

(43) Date of publication of application:
**23.03.2016 Bulletin 2016/12**

(73) Proprietor: **Seoul Semiconductor Co., Ltd.
Ansan-si, Gyeonggi-do 15429 (KR)**

(72) Inventors:
• **OHNO, Hiroshi**
  **Tokyo 105-8001 (JP)**
• **KATO, Mitsuaki**
  **Tokyo 105-8001 (JP)**
• **HISANO, Katsumi**
  **Tokyo 105-8001 (JP)**
• **KONDO, Hiroyasu**
  **Yokohama-shi**
  **Kanagawa 235-8522 (JP)**
• **TSUDA, Ryoji**
  **Yokohama-shi**
  **Kanagawa 235-8522 (JP)**

(74) Representative: **Hoffmann Eitle
Patent- und Rechtsanwälte PartmbB
Arabellastraße 30
81925 München (DE)**

(56) References cited:
**WO-A1-2012/124637    WO-A1-2012/124637
WO-A1-2013/022040    CN-A- 103 032 729
CN-A- 103 032 729    JP-A- 2010 231 930
JP-A- 2012 163 602    JP-A- 2012 209 237**

**Description**

Embodiments of the present invention relate to an illumination apparatus.

Background Art

An LED lamp for general illumination has a strong light directivity and a narrow light distribution angle of about 120°. Thus, when the LED lamp is attached to a light fixture and turned on, light spreads in a different way and is narrower compared to that of an incandescent light bulb.

There is known an LED lamp in which a wide light distribution lens is disposed on a COB-type light emitting module to eliminate the above problem. The wide light distribution lens comprises, for example, an entrance surface, a first exit surface facing the entrance surface, and a second exit surface which connects the outer circumferential edge of the entrance surface and the outer circumferential edge of the first exit surface.

The first exit surface has a shape that is conically recessed toward the center of the entrance surface. The second exit surface coaxially surrounds an optical axis passing through the center of the entrance surface, and is inclined to project outward in the diametrical direction of the wide light distribution lens toward the outer circumferential edge of the first exit surface from the outer circumferential edge of the entrance surface.

If light emitted by the light emitting module enters the entrance surface of the wide light distribution lens, part of the light that has entered is totally reflected by the first exit surface and travels to the second exit surface, and also exits from the second exit surface toward the lateral side and the rear side of the wide light distribution lens. Therefore, the light coming out of the second exit surface becomes a light distribution component traveling to the rear side of the LED lamp, so that the light distribution angle of the LED lamp becomes wider.

Citation List

Patent Literature

Patent Literature 1: Japanese Patent No. 4660654

Summary of Invention

WO 2013/022040 A1, WO 2012/124637 A1 and CN 103 032 729 A are further prior art.

Technical Problem

As described above, if the second exit surface is inclined to diametrically spread from the outer circumferential edge of the entrance surface toward the outer circumferential edge of the first exit surface, a size increase of the wide light distribution lens is inevitable. Even if an attempt is made to apply the wide light distribution lens to a small-sized LED lamp with a globe having a shape similar to that of, for example, a chandelier bulb, the wide light distribution lens can not be housed in the globe.

Moreover, the conventional wide light distribution lens has a complicated shape in which the first exit surface is conically recessed. This leads to difficulty in accurate processing of the first exit surface, variation in optical performance, and the increase in the manufacturing cost of the wide light distribution lens.

An object of the present invention is to provide an illumination apparatus which is capable of downsizing an optical element while keeping a sufficient light distribution angle and which is also capable of facilitating the processing of the optical element.

Solution to Problem

The invention is defined by claim 1.

An illumination apparatus according to an embodiment includes a light source having a light emitting surface configured to emit light in a surface shape by using a semiconductor light emitting element, and an optical element which has a shape rotationally symmetrical with respect to an axis line along a direction that passes through the center of gravity of the light emitting surface to intersect at right angles with the light emitting surface and which transmits the light of the light source.

The optical element includes a through-hole provided along the axis line, an entrance surface which faces the light emitting surface and in which the through-hole is open, an exit surface extending in a direction to depart from the light source to surround the axis line from the outer circumferential edge of the entrance surface, and a total reflection surface which connects the distal edge of the exit surface and the inner circumferential edge of the entrance surface facing the through-hole to define the through-hole. The total reflection surface is configured to totally reflect, toward the exit surface, the light of the light source that has entered the optical element from the entrance surface.

Brief Description of Drawings

FIG. 1 is a partially sectional side view showing an LED lamp according to a first embodiment;
FIG. 2 is a sectional view showing the positional relation between an optical lens unit and a COB-type light emitting module according to the first embodiment;
FIG. 3 is a sectional view showing paths of light rays which pass through a through-hole of a wide light distribution lens according to the first embodiment;
FIG. 4 is a sectional view showing paths of light rays totally reflected by a total reflection surface of the wide light distribution lens according to the first embodiment;
FIG. 5 is a sectional view showing paths of light rays which have entered a depressed portion in the wide light distribution lens according to the first embodiment;
FIG. 6 is a graph showing the relation between $l/r_Q$ and the refractive index of the wide light distribution lens according to the first embodiment;
FIG. 7 is diagram showing the light distribution of light which has passed through the optical lens unit according to the first embodiment;
FIG. 8 is a partially sectional side view showing the LED lamp according to a second embodiment;
FIG. 9 is a sectional view showing the positional relation between an SMD-type light emitting module and the optical lens unit according to a third embodiment;
FIG. 10 is a sectional view of the LED lamp according to a fourth embodiment; and
FIG. 11 is a partially sectional side view showing the LED lamp according to a fifth embodiment.

Description of Embodiments

[First Embodiment]

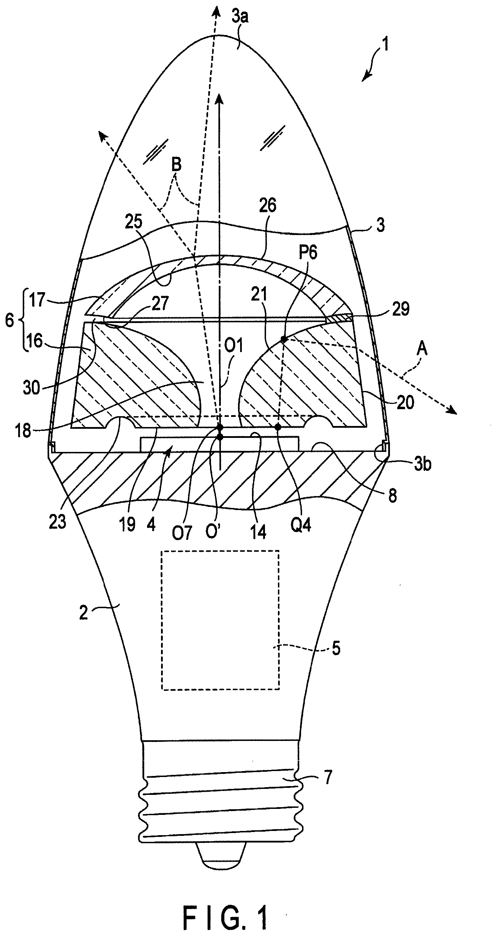

Hereinafter, a first embodiment is described with reference to FIG. 1 to FIG. 7.

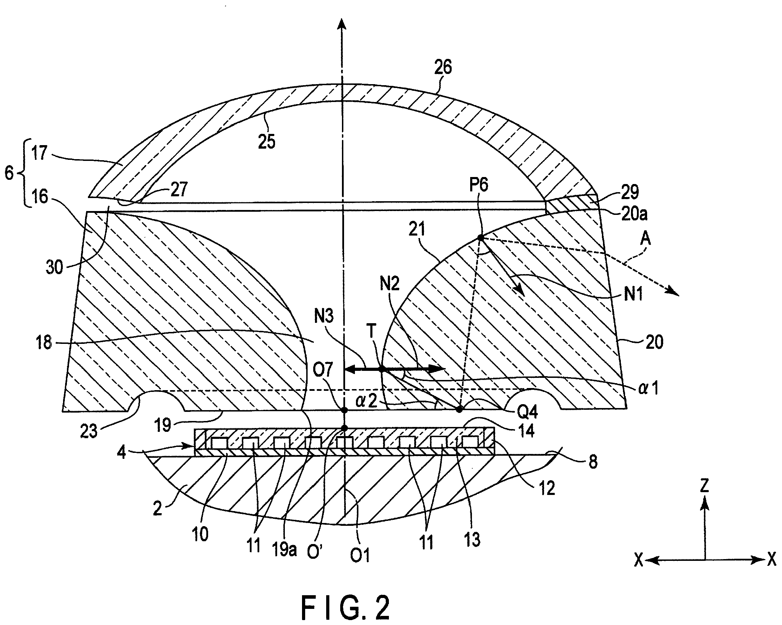

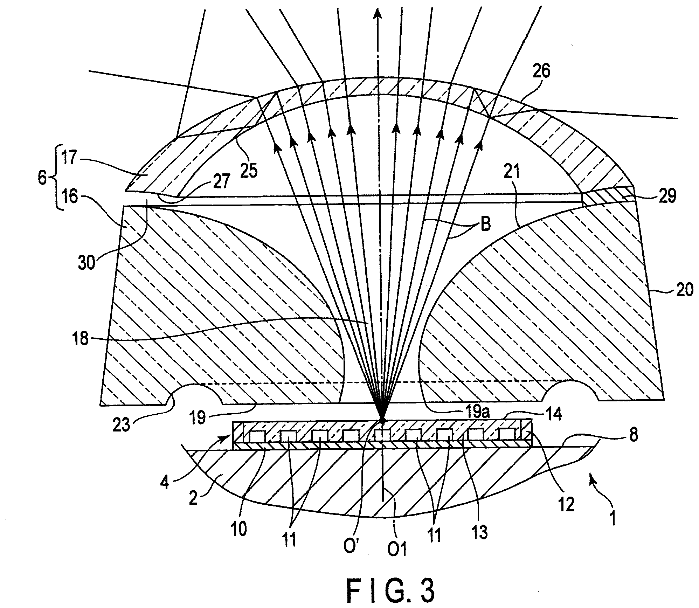

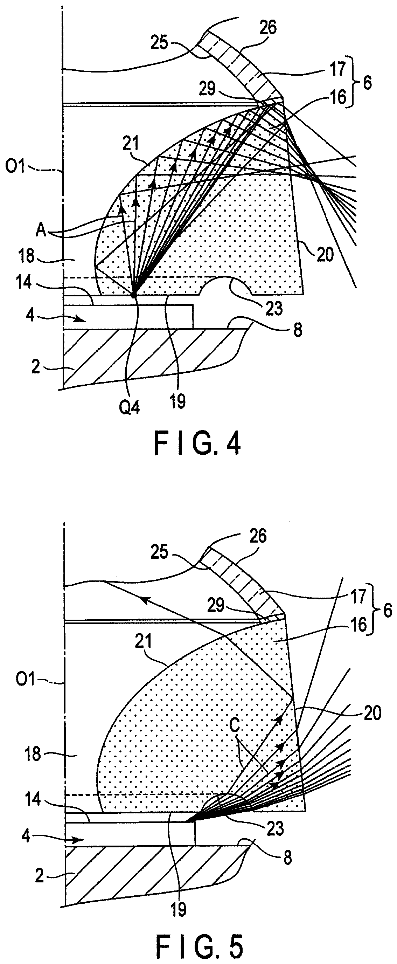

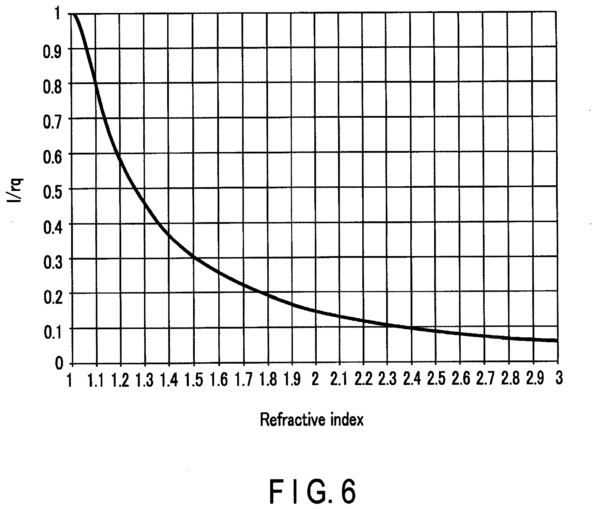

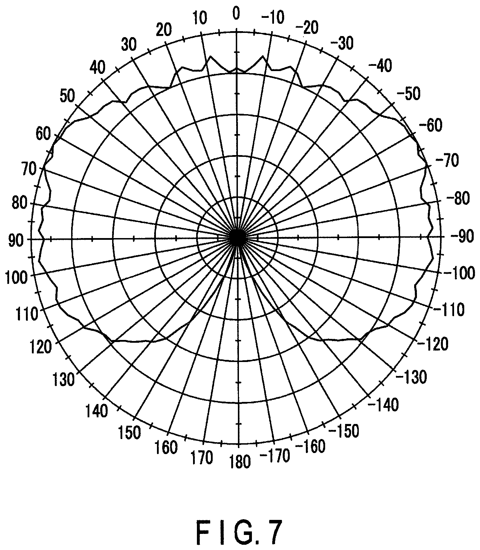

FIG. 1 is a side view of an LED lamp which is one example of an illumination apparatus. FIG. 2 is a sectional view showing the positional relation between an optical lens unit and a COB-type light emitting module. FIG. 3 is a sectional view showing paths of light rays which pass through a through-hole of a wide light distribution lens. FIG. 4 is a sectional view showing paths of light rays totally reflected by a total reflection surface of the wide light distribution lens. FIG. 5 is a sectional view showing paths of light rays which have entered a depressed portion in the wide light distribution lens. FIG. 6 is a graph showing the relation between $l/r_Q$ and the refractive index of the wide light distribution lens. FIG. 7 is diagram showing the light distribution of light which has passed through the optical lens unit (the relation between the light distribution angle and the luminous intensity).

FIG. 1 shows an LED lamp 1 having a shape similar to that of, for example, a chandelier bulb. The LED lamp 1 comprises, as the main elements, a lamp body 2, a globe 3, a COB (chip-on-board) type light emitting module 4, a lighter circuit 5, and an optical lens unit 6.

The lamp body 2 is made of a metallic material such as aluminum which is higher in thermal conductivity than iron, and also functions as a heat release portion. The lamp body 2 is a substantially circular cylindrical element having one end and the other end, and is shaped to gradually increase in diameter from one end to the other end.

An E-type base 7 is attached to one end of the lamp body 2. A support surface 8 is formed at the other end of the lamp body 2. The support surface 8 is a flat surface that intersects at right angles with the central axis line of the lamp body 2.

The globe 3 is substantially conically shaped by using a transparent synthetic resin material such as an acrylic. The globe 3 has a spherical top 3a, and an open end 3b facing the top 3a. The open end 3b defines the maximum diameter of the globe 3. The open end 3b of the globe 3 is coaxially coupled to the other end of the lamp body 2. The globe 3 covers the support surface 8 of the lamp body 2.

According to the present embodiment, the lamp body 2 having the base 7 and the globe 3 cooperate with each other to form an outer shape similar to that of a chandelier bulb.

The shape of the globe 3 is not limited to the conical shape, and may be a semispherical shape. Moreover, the globe 3 may be made of, for example, a milk-white synthetic resin material, and provided with light scattering properties.

The light emitting module 4 is an element that constitutes a light source of the LED lamp 1. As shown in FIG.

2, the light emitting module 4 comprises, as the main elements, a rectangular insulating substrate 10, light emitting diodes 11, a frame 12, and a sealing material 13.

The insulating substrate 10 is fixed to the center of the support surface 8 of the lamp body 2 by such means as screw cramps. Moreover, the insulating substrate 10 is thermally connected to the support surface 8 via, for example, a thermally conducting grease.

The light emitting diodes 11 are one example of semiconductor light emitting elements, and are arranged in matrix form on the insulating substrate 10. The frame 12 is adhesively bonded to the outer circumferential portion of the front side of the insulating substrate 10 to surround the light emitting diodes 11.

The sealing material 13 is made of a transparent or semitransparent resin material including fluorescent substance particles. The sealing material 13 fills a region enclosed by the frame 12 to cover the light emitting diodes 11.

The fluorescent substance particles included in the sealing material 13 are excited by the light emitted by the light emitting diodes 11, and then generate light of a color complementary to the color of the light emitted by the light emitting diodes 11. As a result, the light emitted by the light emitting diodes 11 and the light emitted by the fluorescent substance particles mix with each other to become white light in the sealing material 13. The white light exits from the surface of the sealing material 13.

Therefore, the surface of the sealing material 13 functions as a square light emitting surface 14 which emits light in a surface shape. According to the present embodiment, the light which exits from the light emitting surface 14 is visible light having a wavelength of, for example, 400 nm to 800 nm, but the wavelength of the light is not limited to this.

As shown in FIG. 1 and FIG. 2, the light emitting module 4 has a straight optical axis O1 as an axis line. The optical axis O1 extends in a direction that intersects at right angles with the light emitting surface 14 and the support surface 8 of the lamp body 2 through a center O' of the light emitting surface 14 or the part near the center O'.

The center O' of the light emitting surface 14 signifies the center of gravity of the light emitting surface 14. Thus, the center O' may not be on the light emitting surface 14 ("on the surface", when referred to, hereinafter means the top of the surface). For example, when the light emitting surface is circular-ring-shaped, the center O' is the center of an outer circle or an inner circle that defines the shape of the light emitting surface, and does not exist on the light emitting surface.

The light distribution of the light which exits from the light emitting surface 14 is a distribution which is nearly symmetrical with respect to the optical axis O1. Specifically, the light emitting surface 14 has a light distribution close to, for example, that of Lambertian, but the light distribution is not limited to this light distribution.

According to the present embodiment, the light emitting surface 14 of the light emitting module 4 is in the shape of a rectangle, for example, having a short side of 10 mm and a long side of 16 mm, and has a light emitting area C of 160 mm$^2$. FIG. 2 shows the light emitting module 4 seen from the direction of the short side.

The light emitting surface 14 is not exclusively rectangular and may be circular. When the light emitting area C of the circular light emitting surface 14 is 160 mm$^2$, the radius $r_C$ of the light emitting surface 14 can be represented by

[Expression 1]

$$r_C = \sqrt{\frac{C}{\pi}} \quad (1)$$

and the radius $r_C$ = 7.1 mm.

Furthermore, the radius $r_{HC}$ of a circle having an area which is half of the light emitting area C can be represented by

[Expression 2]

$$r_{HC} = \sqrt{\frac{C}{2\pi}} \quad (2)$$

and the radius $r_{HC}$ = 5.0 mm.

The lighter circuit 5 supplies a constant current to the light emitting diodes 11 of the light emitting module 4. The lighter circuit 5 is housed inside the lamp body 2, and is electrically connected to the base 7 and the light emitting diodes 11.

The optical lens unit 6 is housed inside the globe 3 to face the light emitting surface 14 of the light emitting module 4. The attachment structure of the optical lens unit 6 is not shown. In the present embodiment, the optical lens unit 6 is supported on the support surface 8 of the lamp body 2 apart from the support surface 8.

As shown in FIG. 1 and FIG. 2, the optical lens unit 6 comprises a wide light distribution lens 16 and a diffusing lens 17.

The wide light distribution lens 16 is one example of an optical element, and is disposed coaxially with the optical axis O1. The wide light distribution lens 16 has a shape rotationally symmetrical with respect to the optical axis O1. Here, the rotational symmetry means that when a target is rotated around the optical axis O1, the shape drawn by the target corresponds to the original shape and the rotation angle is less than 360°.

The wide light distribution lens 16 is made of, for example, a transparent acrylic. A refractive index n of the acrylic is 1.49. The wide light distribution lens 16 is not exclusively made of an acrylic and can be made of a transparent material such as glass or polycarbonate which transmits visible light. The material of the wide light distribution lens 16 is not particularly limited.

As shown in FIG. 2, the wide light distribution lens 16 comprises a through-hole 18, an entrance surface 19, an exit surface 20, and a total reflection surface 21 that are coaxially provided.

The through-hole 18 is provided along the optical axis O1 through the wide light distribution lens 16. The entrance surface 19 is a flat surface that faces the light emitting surface 14 of the light emitting module 4, and the through-hole 18 is open in its center. The outer circumferential portion of the entrance surface 19 projects around the light emitting surface 14. This projecting outer circumferential portion of the entrance surface 19 faces the support surface 8 of the lamp body 2.

The exit surface 20 extends in a direction to depart from the light emitting module 4 to surround the optical axis O1 from the outer circumferential edge of the entrance surface 19. Moreover, the exit surface 20 is a tapered surface which is slightly inclined in a direction to approach the optical axis O1 as the exit surface 20 departs from the light emitting module 4. In other words, the exit surface 20 is inclined along the circumferential surface of the conical globe 3 (see FIG. 1).

The total reflection surface 21 connects the distal edge of the exit surface 20 far from the light emitting module 4 to the inner circumferential edge of the entrance surface 19 facing the through-hole 18. That is, the total reflection surface 21 is a surface that defines the through-hole 18, and has a shape that is curved to spread in the diametrical direction of the wide light distribution lens 16 as the total reflection surface 21 departs from the entrance surface 19 from around optical axis O1.

More specifically, the total reflection surface 21 slightly curves and protrudes in a direction to approach the optical axis O1 from an opening 19a in the entrance surface 19 of the through-hole 18. The vertex of this protruding curved portion is a constriction T having the smallest diameter in the through-hole 18. Moreover, the total reflection surface 21 curves and protrudes inward in a direction to approach the optical axis O1 from the constriction T toward a distal edge 20a of the exit surface 20.

In the present embodiment, all of the entrance surface 19, the exit surface 20, and the total reflection surface 21 are formed into glossy surfaces.

Next, the sectional shape of the wide light distribution lens 16 is described in more detail with reference FIG. 1 and FIG. 2. In FIG. 1 and FIG. 2, the intersection of a segment extending along the entrance surface 19 and the optical axis O1 is a center O7, and a given point on the entrance surface 19 is Q4.

If a distance $r_Q$ from the point Q4 to the optical axis O1 is 5.0 mm which is equal to the above-mentioned radius $r_{HC}$, the following relation is satisfied:
[Expression 3]

$$r_Q \leq r_{HC} \quad (3)$$

Furthermore, a given point on the total reflection surface 21 is P6, and a critical angle $\theta_C$ at which the light is totally reflected when a normal N1 running to the inside of the wide light distribution lens 16 from the point P6 is drawn is
[Expression 4]

$$\theta_C = \sin^{-1}\left(\frac{1}{n}\right) \quad (4)$$

In this case, an angle $\theta$ defined by a vector PQ connecting the point P6 to the point Q4 and the normal N1 satisfies the following relation:
[Expression 5]

$$\theta \geq \theta_C \quad (5)$$

In the present embodiment, the wide light distribution lens 16 is acrylic, so that $\theta_C$ is 42.2°.

Next, the specific shape of the total reflection surface 21 is described.

In FIG. 2, the origin of the through-hole 18 is O7, the direction in which the light is extracted from the origin O7 along the optical axis O1 is the z-direction, the direction extending along the entrance surface 19 from the origin O7 is the x-direction, and the distance of a point from the optical axis O1 at which the distance to the optical axis O1 is the shortest on the entrance surface 19 is I. In this case, the shape of the total reflection surface 21 can be represented by [Expression 6]

$$x = r_Q - (r_Q - l)\exp(\tan\theta_a\Theta)\cos\Theta \quad (6)$$

[Expression 7]

$$z = (r_Q - l)\exp(\tan\theta_a\Theta)\sin\Theta \quad (7)$$

In Expression (6) and Expression (7), a parameter θ is a finite region included in the following range: [Expression 8]

$$0 \leq \Theta \leq \pi \quad (8)$$

In Expression (6) and Expression (7), a real constant $\theta_a$ is a constant in the following range: [Expression 9]

$$\theta_C \leq \theta_a < \frac{\pi}{2} \quad (9)$$

In Expression (6) and Expression (7), a parameter I is: [Expression 10]

$$l < r_Q \quad (10)$$

Here, for example, if a parameter θ is the entire interval of [Expression 11]

$$0 \leq \Theta \leq \frac{3\pi}{4} \quad (11)$$

Expression (8) is satisfied. If $\theta_a$ = 47.7°, Expression (9) is satisfied. If I = 3.9, Expression (10) is satisfied, and [Expression 12]

$$\frac{l}{r_Q} > \left(1 - \frac{1}{\exp(\theta_C\tan\theta_C)\cos\theta_C}\right) = 0.3 \quad (12)$$

is also satisfied.

When a normal running to the inside of the wide light distribution lens 16 from a given point on the exit surface 20 is drawn, the exit surface 20 of the wide light distribution lens 16 has such a shape that (the extension of) the normal intersects with a plane including the light emitting surface 14.

As shown in FIG. 1 and FIG. 2, a depressed portion 23 is formed in the vicinity of the outer circumferential portion of the entrance surface 19 of the wide light distribution lens 16. The depressed portion 23 is circular-ring-shaped around the light emitting module 4, and its sectional shape is a semicircular torus shape. According to the present embodiment, the diameter of the semicircle defined by the depressed portion 23 is 4 mm, but the value of the diameter is not particularly limited.

Furthermore, the depressed portion 23 has a great circle drawn by the center of a small circle (semicircle) of the torus. A radius $r_T$ of the great circle satisfies the following relation:
[Expression 13]

$$r_T \geq r_{HC} \quad (13)$$

In the present embodiment, for example, $r_T$ = 10 mm.

Meanwhile, the diffusing lens 17 of the optical lens unit 6 is one example of an optical diffusion portion, and is made of, for example, an acrylic which transmits visible light. The diffusing lens 17 has a rear surface 25, a front surface 26, and an end face 27.

The rear surface 25 faces the total reflection surface 21 to cover the through-hole 18 of the wide light distribution lens 16. The front surface 26 is located opposite to the rear surface 25 to be exposed inside the globe 3. Each of the rear surface 25 and the front surface 26 is a spherical surface through which the optical axis O1 of the light emitting module 4 coaxially passes, and rises and curves in a direction to depart from the total reflection surface 21 around the optical axis O1. In the present embodiment, the curvature radius of the front surface 26 is slightly greater than the curvature radius of the rear surface 25.

According to the present embodiment, the front surface 26 is a white light diffusing surface in which minute protrusions and depressions are provided. The light diffusing surface is formed by what is known as sandblasting in which an abrasive having a diameter of, for example, 100 $\mu$m is blown to the entire front surface 26.

The light diffusing surface is not exclusively formed by the sandblasting, and may be formed by applying a paint including light diffusing particles to the front surface 26. Moreover, the light diffusing surface is not exclusively formed in the front surface 26 but may be formed in the rear surface 25 or may be formed in both the front surface 26 and the rear surface 25.

The end face 27 is an inclined circular-ring-shaped surface which connects the outer circumferential edge of the rear surface 25 and the outer circumferential edge of the front surface 26. The end face 27 faces the outer circumferential portion of the total reflection surface 21 of the wide light distribution lens 16, and is slightly curved along the curvature of the total reflection surface 21.

The end face 27 of the diffusing lens 17 is adhesively bonded to the total reflection surface 21 of the wide light distribution lens 16 via an adhesive agent 29 at places along the circumferential direction. Thus, the diffusing lens 17 and the wide light distribution lens 16 are combined with each other to constitute the optical lens unit 6.

In addition, gaps 30 are kept between the end face 27 of the diffusing lens 17 and the total reflection surface 21 of the wide light distribution lens 16 except for the parts of the adhesive agent 29.

The light which exits from the region in the light emitting surface 14 of the light emitting module 4 facing the entrance surface 19 of the wide light distribution lens 16 enters the entrance surface 19. On the other hand, the light emitted from the region located in the vicinity of the center O' of the light emitting surface 14 with which the optical axis O1 intersects directly enters the diffusing lens 17 through the through-hole 18 of the wide light distribution lens 16.

To be specific, as indicated by a light ray A in FIG. 1, light which enters the given point Q4 on the entrance surface 19 reaches the total reflection surface 21 through the wide light distribution lens 16. This light is totally reflected in the total reflection surface 21 toward the exit surface 20, and exits to the periphery of the LED lamp 1 from the exit surface 20 through the globe 3.

Similarly, light which enters the entrance surface 19 at a position closer to the optical axis O1 than the point Q4 in the entrance surface 19 is totally reflected in the total reflection surface 21 and guided to the exit surface 20, and then exits to the periphery of the LED lamp 1 from the exit surface 20 through the globe 3.

Furthermore, light which enters the entrance surface 19 at a position farther from the optical axis O1 than the point Q4 in the entrance surface 19 enters the total reflection surface 21 so that the angle of incidence with the total reflection surface 21 is less than or equal to the critical angle $\theta_C$ or is at a value close to the critical angle $\theta_C$. Thus, the light that has reached the total reflection surface 21 from the entrance surface 19 partly passes through the total reflection surface 21, but is mostly reflected toward the exit surface 20.

That is, the principle part of the light which enters the entrance surface 19 is reflected toward the exit surface 20 in the total reflection surface 21, and then exits toward the globe 3 from the exit surface 20.

In fact, when the total reflection surface 21 has a shape defined by Expression (6) and Expression (7), the angle defined by the light ray A traveling to the given point P6 on the total reflection surface 21 from the given point Q4 on the entrance surface 19 and by an outward normal running toward the diffusing lens 17 from the point P6 is $\theta_a$. Meanwhile, $\theta_a$ satisfies Expression (9), and is equal to or more than the critical angle. As a result, total reflection certainly occurs on the total reflection surface 21.

Moreover, if $\theta_a = \theta_C$ in Expression (6) and Expression (7), the wide light distribution lens 16 has the compactest shape.

In conclusion, most of the light of the light emitting module 4 which enters the entrance surface 19 is totally reflected toward the exit surface 20 in the total reflection surface 21, and finally exits from the exit surface 20 to spread outward along the diametrical direction of the wide light distribution lens 16, and is then provided for the purpose of illumination.

The area of the entrance surface 19 needs to be large enough to ensure sufficient components of light which spreads in the diametrical direction of the wide light distribution lens 16. Ideally, half of the components of the light emitted by the light emitting surface 14 of the light emitting module 4 are preferably guided to the exit surface 20.

To achieve this, it is necessary to cover more than half of the light emitting surface 14 of the light emitting module 4 with the entrance surface 19 of the wide light distribution lens 16. This condition can be represented by Expression (3).

FIG. 4 shows a light ray diagram obtained by simulating light rays which reach the exit surface 20 from the total reflection surface 21. FIG. 4 shows part of the section of the optical lens unit 6 including the axial direction of the optical axis O1. In this simulation, LightTools (registered trademark) by Synopsys corporation is used.

As apparent from FIG. 4, the light of the light emitting module 4 which enters the point Q4 on the entrance surface 19 reaches the total reflection surface 21 through the wide light distribution lens 16, and is then totally reflected toward the exit surface 20 in the total reflection surface 21.

Providing the through-hole 18 through which the optical axis O1 coaxially passes in the center of the wide light distribution lens 16 is important for the total reflection surface 21 to perform the above-mentioned reflection function. In other words, the difference of refractive index in the interface between the air and the total reflection surface 21 is necessary for the total reflection of light in the total reflection surface 21.

As shown in FIG. 2, the total reflection surface 21 which defines the through-hole 18 is a curved surface having the point T (constriction) closest to the optical axis O1. When the angle defined by a vector TQ connecting the point T to the point Q4 and by a normal running to the inside of the wide light distribution lens 16 from the point T is $\alpha 1$, the angle $\alpha 1$ is equal to an angle $\alpha 2$ defined by a segment running to the optical axis O1 from the point Q4 along the entrance surface 19 and by a vector QT.

As a result, an outward normal N3 running toward the optical axis O1 from the point T on the total reflection surface 21 intersects at right angles with the optical axis O1.

Furthermore, the angle $\alpha 1$ corresponds to the total reflection angle of the light ray which is totally reflected at the point T. The distance between the point T and the optical axis O1 is equal to X when $\Theta = \theta_a$ in Expression (6).

Specifically, x is

[Expression 14]

$$x = r_Q - \left(r_Q - l\right)\exp\left(\theta_a \tan\theta_a \Theta\right)\cos\theta_a \quad (14)$$

For the through-hole 18 to exist in the wide light distribution lens 16, x represented by Expression (14) needs to be higher than 0. In this case, l satisfies the following relation:

[Expression 15]

$$\frac{l}{r_Q} > \left(1 - \frac{1}{\exp\left(\theta_a \tan\theta_a\right)\cos\theta_a}\right) \quad (15)$$

However, l also needs to satisfy Expression (10) at the same time.

That is, the maximum value of the left side of Expression (15) is 1. Here, $\theta_a$ is a value in the range represented by Expression (9), and the right side of Expression (15) becomes the minimum in this range when $\theta_a = \theta_C$.

If this is used, l has to satisfy at least the following:

[Expression 16]

$$\frac{l}{r_Q} > \left(1 - \frac{1}{\exp\left(\theta_C \tan\theta_C\right)\cos\theta_C}\right) \quad (16)$$

FIG. 6 is a graph in which the value of the right side of Expression (16) is plotted. In FIG. 6, the horizontal axis indicates the refractive index of the wide light distribution lens 16, and the vertical axis indicates the ratio of l to $r_Q$. As apparent from FIG. 6, the allowed value of l is lower when the refractive index of the wide light distribution lens 16 is higher.

In the meantime, as indicated by light rays B in FIG. 1, light which passes through the through-hole 18 of the wide light distribution lens 16 enters the diffusing lens 17. The light which has entered the diffusing lens 17 is diffused in a wide range in the process of passing through the light diffusing surface of the diffusing lens 17, and then exits toward the top 3a of the globe 3.

FIG. 3 shows a light ray diagram obtained by simulating the light rays B traveling to the wide light distribution lens 16 in the vicinity of the center O' of the light emitting surface 14. FIG. 3 shows part of the section of the optical lens unit 6 cut in a plane including the optical axis O1.

As apparent from FIG. 3, the light which exits from the vicinity of the center O' of the light emitting surface 14 reaches the diffusing lens 17 through the through-hole 18 of the wide light distribution lens 16, and exits in the direction of the top 3a of the globe 3 through the diffusing lens 17.

Furthermore, in the present embodiment, the depressed portion 23 is provided in the outer circumferential portion of the entrance surface 19 of the wide light distribution lens 16 outside the light emitting surface 14 of the light emitting module 4. As shown in FIG. 5, when the light emitted from the outer circumferential portion of the light emitting surface 14 enters the depressed portion 23, the depressed portion 23 guides the light into the wide light distribution lens 16 with almost no change in the refraction direction of the light.

Most of the light which has thus been guided into the wide light distribution lens 16 reaches the exit surface 20 through the wide light distribution lens 16, and exits to the periphery of the LED lamp 1 from the exit surface 20 through the globe 3.

In contrast, when there is no depressed portion 23 on the entrance surface 19, most of the light which enters this position of the entrance surface 19 is reflected by the entrance surface 19. It is undeniable that the light reflected by the entrance surface 19 results in a loss.

FIG. 5 shows a light ray diagram obtained by simulating light rays C traveling to the depressed portion 23 from the circumferential portion of the light emitting surface 14. FIG. 5 shows part of the section of the optical lens unit 6 cut in a plane including the optical axis O1.

As apparent from FIG. 5, the light which travels to the depressed portion 23 from the circumferential portion of the light emitting surface 14 reaches the exit surface 20 through the wide light distribution lens 16 with almost no change in the angle of incidence with the depressed portion 23, and then exits to the periphery of the wide light distribution lens 16 from the exit surface 20.

Furthermore, FIG. 7 shows the result of light a ray tracking simulation of the light distribution of light which has passed through the optical lens unit 6 in the LED lamp 1 according to the present embodiment. FIG. 7 shows, by a radar chart, the luminous intensity in contrast to the light ray direction in which the direction (z-direction) of the extraction of the light along the optical axis O1 of the light emitting module 4 is 0°.

As apparent from FIG. 7, the intensity of the light which exits in a horizontal direction (x-direction) that intersects at right angles with the optical axis O1 is higher, and the maximum luminous intensity of the light ranges from 60° to 70° relative to the optical axis O1. To maximize the luminous intensity in the direction of 0°, it is possible to bring the diffusing surface of the diffusing lens 17 closer to a mirror surface and decrease the diffusing effect. Moreover, as apparent from the light distribution curve in FIG. 7, the light distribution angle defined by two directions in which the luminous intensity is half of the maximum luminous intensity is about 300° which is as great as that of an incandescent light bulb.

As described above, in the LED lamp 1 according to the first embodiment, the light of the light emitting module 4 which enters the entrance surface 19 of the wide light distribution lens 16 is totally reflected in the total reflection surface 21, and then exits to the periphery of the wide light distribution lens 16 from the exit surface 20 which surrounds the optical axis O1.

Furthermore, the light which is guided to the through-hole 18 of the wide light distribution lens 16 from the center of the light emitting surface 14 is guided to the diffusing lens 17 through the through-hole 18, and exits from the diffusing lens 17 in the light extraction direction along the optical axis O1.

Further yet, according to the first embodiment, the entire inner surface of the through-hole 18 of the wide light distribution lens 16 constitutes the total reflection surface 21, which can ensure a sufficient area of the total reflection surface 21. Moreover, the total reflection surface 21 is an inwardly protruding curved surface having the point T closest to the optical axis O1, and can therefore totally reflect, to the exit surface 20, most of the components of the light traveling to the total reflection surface 21 from the entrance surface 19.

As a result, the light which is emitted by the light emitting surface 14 of the light emitting module 4 and which has strong directivity can be spread in all directions by the use of the optical lens unit 6, and the amount of light diffracted in the direction of the base 7 of the LED lamp 1 can be increased.

Therefore, it is possible to provide the LED light bulb 1 having a light distribution angle equivalent to that of an incandescent light bulb, and achieve a wider light distribution.

In addition, according to the first embodiment, the gaps 30 are kept between the outer circumferential portion of the total reflection surface 21 of the wide light distribution lens 16 and the end face 27 of the diffusing lens 17 except for the parts of the adhesive agent 29. These gaps 30 form an air layer between the outer circumferential portion of the total reflection surface 21 and the end face 27, so that there is a difference of refractive index in the interface between the air layer and the outer circumferential portion of the total reflection surface 21.

As a result, the light guided to the outer circumferential portion of the total reflection surface 21 from the entrance surface 19 is totally reflected by the outer circumferential portion of the total reflection surface 21 and then guided to the exit surface 20. Therefore, more light can be guided by the exit surface 20, which is also advantageous to the acquisition of a wider light distribution.

In addition, according to the first embodiment, the light guided to the through-hole 18 of the wide light distribution lens 16 from the center of the light emitting surface 14 exits in the light extraction direction through the diffusing lens 17. Thus, the total reflection surface 21 has only to be shaped so that most of the light guided from the entrance surface 19 is totally reflected toward the exit surface 20, and the exit surface 20 also has only to be shaped so that the light guided from the total reflection surface 21 can exit without a considerable change in the refraction direction.

In other words, the exit surface 20 has only to be shaped so that when a normal running to the inside of the wide light distribution lens 16 from a given point on the exit surface 20 is drawn, the normal intersects with a plane which includes the light emitting surface 14. Thus, the exit surface 20 will be a tapered surface which is inclined in a direction to approach the optical axis O1 as the exit surface 20 departs from the light emitting module 4.

Therefore, the exit surface 20 does not spread in the diametrical direction of the wide light distribution lens 16 out of the outer circumferential portion of the entrance surface 19, and the wide light distribution lens 16 can be compact. Thus, a dimensional restriction is eased when the wide light distribution lens 16 is housed in the globe 3, and the wide light distribution lens 16 can be readily housed in the globe 3 having a relatively small diameter similar to that of, for example, a chandelier bulb.

Furthermore, according to the first embodiment, the total reflection surface 21 is configured by the entire inner surface of the through-hole 18 which passes through the wide light distribution lens 16, so that the total reflection surface 21 does not need to be a complicated conically recessed shape.

Thus, the total reflection surface 21 can be easily processed, and the manufacturing cost of the wide light distribution lens 16 can be reduced. Another advantage is that the processing accuracy of the total reflection surface 21 can be increased to obtain desired light reflection performance.

The diffusing lens 17 may be configured to be located away from the wide light distribution lens 16. According to this configuration, air can flow into the through-hole 18 from the space between the diffusing lens 17 and the wide light distribution lens 16, and the light emitting module 4 can be advantageously cooled by natural convection. According to the present embodiment, the gaps 30 are provided between the diffusing lens 17 and the wide light distribution lens 16, so that air can be circulated in the optical lens unit 6.

[Second Embodiment]

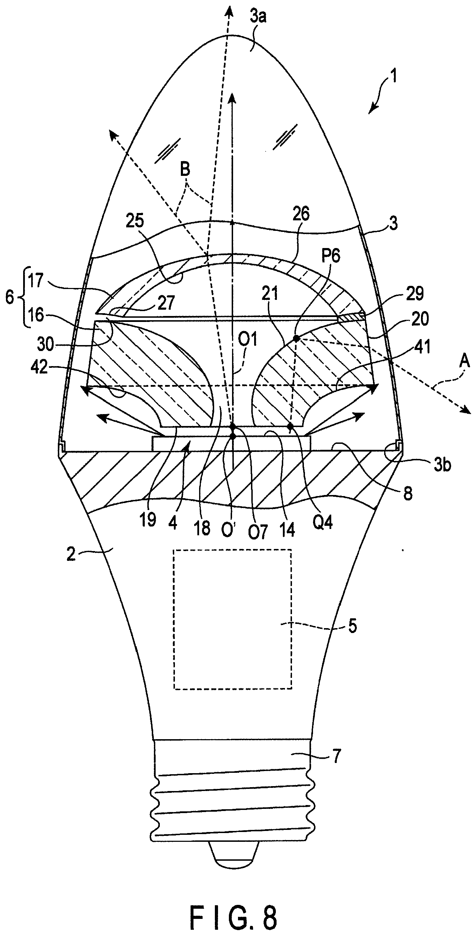

FIG. 8 is a partial sectional view of the LED lamp 1 according to a second embodiment.

The second embodiment is different from the first embodiment in the shape of the wide light distribution lens 16. The configuration of the LED lamp 1 is similar in other respects to that in the first embodiment. Therefore, components which function in a manner similar to those in the first embodiment are provided with the same reference signs and are not described.

As shown in FIG. 8, the wide light distribution lens 16 has a clearance 41. The clearance 41 extends between the entrance surface 19 and the exit surface 20, and is formed continuously in the circumferential direction of the wide light distribution lens 16. The clearance 41 is located outside the light emitting surface 14 of the light emitting module 4 along the diametrical direction of the wide light distribution lens 16.

Furthermore, the clearance 41 has a depressed surface 42 facing the support surface 8 of the lamp body 2. The depressed surface 42 is curved in a circular arc shape from the entrance surface 19 to depart from the support surface 8 toward the exit surface 20 and to be depressed toward the inside of the wide light distribution lens 16.

According to the second embodiment, the clearance 41 is provided in the wide light distribution lens 16, so that light emitted from the circumferential portion of the light emitting surface 14 is guided to the globe 3 through the clearance 41 without entering the wide light distribution lens 16, as indicated by full-line arrows in FIG. 8. Part of the light which has entered the clearance 41 is reflected by the depressed surface 42 and then travels in the direction of the open end 3b of the globe 3.

In other words, by providing the clearance 41, it is possible to prevent the light emitted from the circumferential portion of the light emitting surface 14 from being reflected by the entrance surface 19 of the wide light distribution lens 16 back to the light emitting surface 14. It is therefore possible to minimize the loss of light and positively emit light outward along the diametrical direction of the wide light distribution lens 16.

Consequently, the LED lamp 1 having a wide light distribution angle can be obtained.

[Third Embodiment]

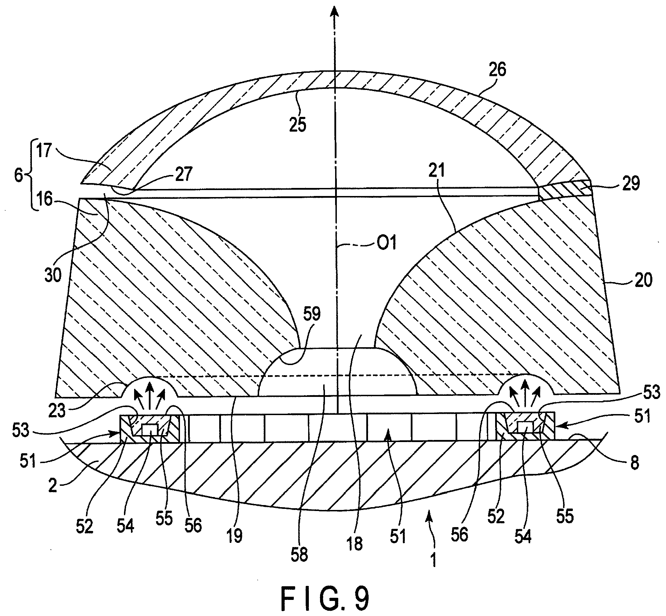

FIG. 9 shows a sectional view of the optical lens unit 6 of the LED lamp 1 according to a third embodiment.

The third embodiment is different from the first embodiment in that surface mount device (SMD) type light emitting modules 51 are used as light sources of the LED lamp 1. The configuration of the optical lens unit 6 is basically similar to that in the first embodiment.

As shown in FIG. 9, the SMD-type light emitting modules 51 are arranged in a circular arc shape on the support surface 8 of the lamp body 2 around the optical axis O1.

Each of the light emitting modules 51 has a base 52. The base 52 has a depressed portion 53 which is open toward the wide light distribution lens 16, and a light emitting diode 54 is mounted on the bottom of the depressed portion 53. The light emitting diode 54 is covered with a sealing material 55 that fills the depressed portion 53. The sealing material 55 includes fluorescent substance particles.

The fluorescent substance particles included in the sealing material 55 are excited by the light emitted by the light emitting diode 54, and then generate light of a color complementary to the color of the light emitted by the light emitting diode 54. As a result, the light emitted by the light emitting diode 54 and the light emitted by the fluorescent substance particles mix with each other to become white light in the sealing material 55. The white light exits from the surface of the sealing material 55.

The surface of the sealing material 55 functions as a light emitting surface 56 which emits light in a surface shape. The light emitting surfaces 56 are arranged in the shape of a circular ring along the arrangement direction of the light emitting modules 51. Thus, the center of gravity of the light emitting surfaces 56 which continue in the shape of a circular ring is the center of an outer circle or an inner circle that defines the shape of the circular-arc-shaped light emitting surfaces 56, and is located on the optical axis O1. The light emitting surfaces 56 arranged in the circular arc shape face the depressed portion 23 of the wide light distribution lens 16.

In the present embodiment, a depressed part 58 is formed at an end of the total reflection surface 21 that continues the entrance surface 19. The depressed part 58 has a shape in which the through-hole 18 is spread in the circumferential direction, and has an inner surface 59 facing the center of the support surface 8. The inner surface 59 is curved in a circular arc shape to be depressed toward the inside of the wide light distribution lens 16. The inner surface 59 of the depressed part 58 functions as a reflective surface which reflects, toward the total reflection surface 21, part of the light which enters the depressed portion 23 on the entrance surface 19.

The light emitted from the light emitting surfaces 56 of the light emitting modules 51 enters the depressed portion 23 of the entrance surface 19, as indicated by full-line arrows in FIG. 9. The light which has entered the depressed portion 23 is guided into the wide light distribution lens 16 without a considerable change in the refraction direction of the light and then reaches the total reflection surface 21. The light which has reached the total reflection surface 21 is totally reflected by the total reflection surface 21 and then travels to the exit surface 20 and exits from the exit surface 20.

As described above, according to the third embodiment, the light emitted by the light emitting modules 51 enters the depressed portion 23 on the entrance surface 19. As a result, it is possible to hold down the loss of light caused by Fresnel reflection in the entrance surface 19, and efficiently guide the light to the wide light distribution lens 16.

[Fourth Embodiment]

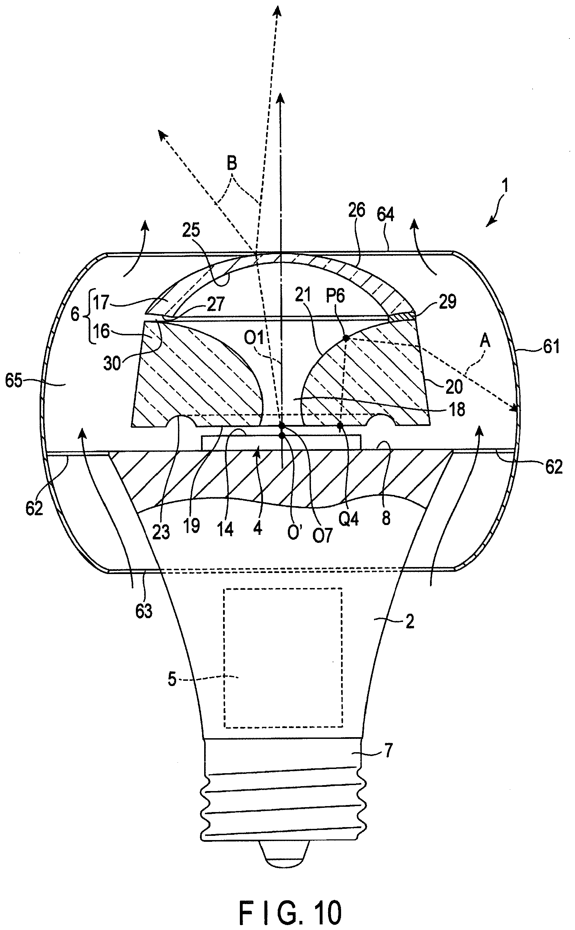

FIG. 10 shows a partial sectional view of the LED lamp according to a fourth embodiment.

The fourth embodiment is different from the first embodiment in the shape of a globe 61. The configuration of the LED lamp 1 is similar in other respects to that in the first embodiment. Therefore, the same components in the fourth embodiment as those in the first embodiment are provided with the same reference signs and are not described.

As shown in FIG. 10, the globe 61 has an outer shape larger in diameter than the support surface 8 of the lamp body 2 and the optical lens unit 6, and is supported by stays 62 radially extending from the lamp body 2. The stays 62 radially extend in a direction to depart from the optical axis O1. The globe 61 is provided coaxially with the optical axis O1, and covers the other end of the lamp body 2 including the support surface 8 and the optical lens unit 6.

The globe 61 is made of a transparent synthetic resin material such as an acrylic, but the globe 61 does not need to be completely transparent. For example, the globe 61 may be made of a milk-white synthetic resin material, and provided with light scattering properties.

As shown in FIG. 10, the globe 61 has a first air vent 63 and a second air vent 64. The first air vent 63 and the second air vent 64 are arranged in the axial direction of the optical axis O1 across the optical lens unit 6 and are coaxially open. In the present embodiment, the intermediate portion of the lamp body 2 passes through the first air vent 63, and the diffusing lens 17 of the optical lens unit 6 faces the second air vent 64.

Thus, a flow path 65 in which air flows is formed inside the globe 61. That is, the flow path 65 communicates with the first air vent 63 and the second air vent 64. Moreover, the other end of the lamp body 2 and the optical lens unit 6 are exposed in the flow path 65.

The light emitting module 4 generates heat when being turned on. The heat generated by the light emitting module 4 is diffused to the lamp body 2 through the support surface 8 of the lamp body 2, and released to the atmosphere from the outer circumferential surface of the lamp body 2. As a result, air inside the globe 61 covering the other end of the lamp body 2 is warmed, and convection occurs in the flow path 65 inside the globe 61.

Specifically, as shown in FIG. 10, when the LED lamp 1 is turned on in such a pose that the diffusing lens 17 of the optical lens unit 6 faces upward, air inside the flow path 65 rises due to natural convection. Thus, the air inside the flow path 65 warmed by receiving the heat released from the lamp body 2 is released to the outside of the globe 61 from the second air vent 64.

In addition, air outside the globe 61 is guided into the flow path 65 from the first air vent 63. As a result, as indicated by full-line arrows in FIG. 10, the air circulates along the flow path 65 inside the globe 61.

Similarly, when the LED lamp 1 is turned on in such a pose that the base 7 faces upward, air inside the flow path 65 is released to the outside of the globe 61 from the first air vent 63, and air outside the globe 61 is guided into the flow path 65 from the second air vent 64. As a result, the air circulates along the flow path 65 inside the globe 61.

As described above, according to the fourth embodiment, if the LED lamp 1 is turned on, natural convection occurs in the flow path 65 inside the globe 61, and the outer circumferential surface of the lamp body 2 is forcibly cooled by the air flowing through the flow path 65.

Consequently, heat release performance of the lamp body 2 improves, and the heat of the light emitting module 4 can be efficiently released to the atmosphere.

[Fifth Embodiment]

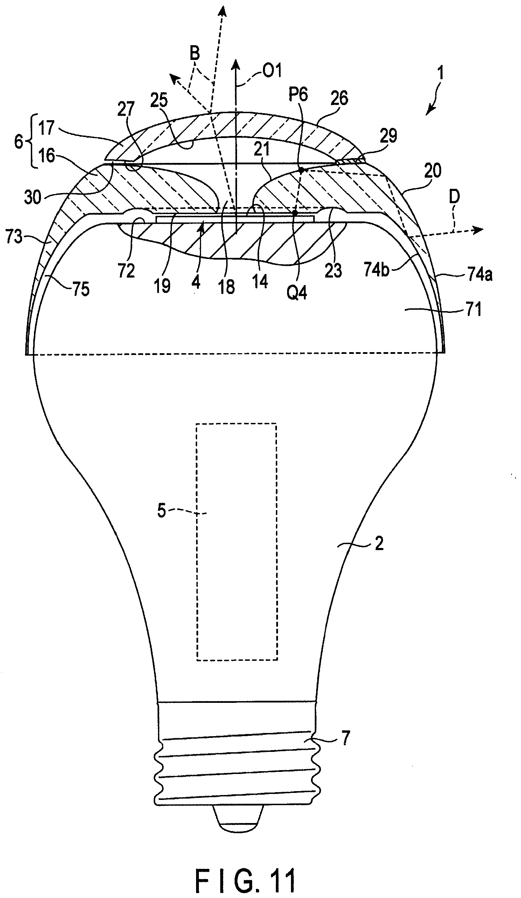

FIG. 11 shows a partial sectional view of the LED lamp 1 according to a fifth embodiment.

The LED lamp 1 according to the fifth embodiment is different from that according to the first embodiment in that the globe is eliminated and the optical lens unit 6 is exposed to the outside of the LED lamp 1. The basic configurations of the lamp body 2, the light emitting module 4, and the optical lens unit 6 are similar to those in the first embodiment. Therefore, the same components in the fifth embodiment as those in the first embodiment are provided with the same reference signs and are not described.

As shown in FIG. 11, the lamp body 2 as a heat release portion has a support portion 71 opposite to the base 7. The support portion 71 is substantially spherically shaped, and a support surface 72 is formed in part of the outer circumferential surface of the support portion 71. The support surface 72 is a flat surface that intersects at right angles with the optical axis O1, and the light emitting module 4 is supported on the support surface 72. The light emitting module 4 is thermally connected to the support surface 72 via, for example, a thermally conducting grease.

As shown in FIG. 11, the wide light distribution lens 16 of the optical lens unit 6 comprises a circular cylindrical extended portion 73. The extended portion 73 is integrally extended from the outer circumferential edge of the entrance surface 19 through the outside of the support portion 71 of the lamp body 2, and coaxially surrounds the support portion 71.

The extended portion 73 has an outer circumferential surface 74a and an inner circumferential surface 74b. The outer circumferential surface 74a continues with the exit surface 20 of the wide light distribution lens 16. The outer circumferential surface 74a and the exit surface 20 are spherically curved, and has a shape that spreads in the diametrical direction of the wide light distribution lens 16 toward the tip of the extended portion 73.

The inner circumferential surface 74b continues with the outer circumferential edge of the entrance surface 19 of the wide light distribution lens 16, and is spherically curved to face and extend along the outer circumferential surface of the support portion 71 of the lamp body 2. A gap 75 which is continuous in the circumferential direction is formed between the outer circumferential surface of the support portion 71 and the inner circumferential surface 74b of the extended portion 73.

Furthermore, the extended portion 73 of the wide light distribution lens 16 is tapered to decrease in thickness as the extended portion 73 departs from the entrance surface 19.

According to the present embodiment, the inner circumferential surface 74b of the extended portion 73 is a white light diffusing surface in which minute protrusions and depressions are provided. The light diffusing surface is formed by what is known as sandblasting in which an abrasive having a diameter of, for example, 100 $\mu$m is blown to the inner circumferential surface 74b.

The light diffusing surface is not exclusively formed by the sandblasting, and may be formed by applying a paint including light diffusing particles to the inner circumferential surface 74b. The light diffusing surface is not exclusively formed in the inner circumferential surface 74b but may be formed in the outer circumferential surface 74a or may be formed in both the outer circumferential surface 74a and the inner circumferential surface 74b. Moreover, both the outer circumferential surface 74a and the inner circumferential surface 74b of the extended portion 73 may be glossy surfaces.

Therefore, in the fifth embodiment, the wide light distribution lens 16 is shaped to integrally continue with the lamp body 2, so that the wide light distribution lens 16 and the diffusing lens 17 also functions as a globe.

As indicated by a broken-line arrow D in FIG. 11, part of light guided to the exit surface 20 from the total reflection surface 21 of the wide light distribution lens 16 is reflected by the exit surface 20 and enters the extended portion 73. The light which has thus entered the depressed portion 23 is diffused by the spherically curved inner circumferential surface 74b, and then exits to the outside of the wide light distribution lens 16 through the outer circumferential surface 74a.

As described above, according to the fifth embodiment, the wide light distribution lens 16 has the extended portion 73 which surrounds the support portion 71 of the lamp body 2, and the light emitted from the light emitting surface 14 of the light emitting module 4 is guided to the extended portion 73. Thus, the light emitting region of the wide light distribution lens 16 is expanded, and it is possible to positively emit light so that the light spreads in the diametrical direction of the wide light distribution lens 16.

Consequently, how light spreads can be improved, and the LED lamp 1 having a wide light distribution angle can be obtained.

Moreover, according to the fifth embodiment, the heat generated by the light emitting module 4 is diffused to the lamp body 2 from the support portion 71 of the lamp body 2, and released to the atmosphere from the outer circumferential surface of the lamp body 2. In this instance, it is considered that the extended portion 73 prevents the heat release of the lamp body 2 because the support portion 71 of the lamp body 2 is surrounded by the extended portion 73 of the wide light distribution lens 16.

Therefore, the extended portion 73 of the wide light distribution lens 16 is tapered to decrease in thickness as the extended portion 73 departs from the entrance surface 19. The acrylic that constitutes the wide light distribution lens 16 has the properties of more easily transmitting heat when the thickness is smaller.

Thus, the heat of the light emitting module 4 transmitted to the outer circumferential surface of the support portion 71 is released to the atmosphere through the extended portion 73 of the wide light distribution lens 16. Therefore, the extended portion 73 of the wide light distribution lens 16 doubles as a heat release portion, and can efficiently release the heat of the light emitting module 4 to the atmosphere without impairing the heat release performance of the lamp body 2.

While several embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the claims.

Reference Signs List

1: LED lamp, 4: light source (light emitting module), 6: optical lens unit, 11: semiconductor light emitting elements (light emitting diodes), 14: light emitting surface, 16: wide light distribution lens (optical element), 18: through-hole, 19: entrance surface, 20: exit surface, 21: total reflection surface, O1: axis line (optical axis).

**Claims**

1. An illumination apparatus comprising:

   a light source (4) having a light emitting surface (14) configured to emit light in a surface shape by using a semiconductor light emitting element; and
   an optical element (16) which has a shape rotationally symmetrical with respect to an axis line (O1) along a direction that passes through the center of gravity (O') of the light emitting surface (14) to intersect at right angles with the light emitting surface (14) and which transmits the light of the light source (4),
   wherein the optical element (16) comprises
   a through-hole (18) provided along the axis line (O1),
   an entrance surface (19) which faces the light emitting surface (14) and in which the through-hole is open,
   an exit surface (20) extending in a direction to depart from the light source (4) to surround the axis line from the outer circumferential edge of the entrance surface (19)
   a total reflection surface (21) which connects the distal edge of the exit surface (20) and the inner circumferential edge of the entrance surface (19) facing the through-hole to define the through-hole (18), the total reflection surface (21) being configured to totally reflect, toward the exit surface (20), the light of the light source (4) that has entered the optical element (16) from the entrance surface (19) **characterized in that** the exit surface (20) is approaching the axis line (O1) as departing from the light source (4).

2. The illumination apparatus according to claim 1, further comprising a light diffusing portion (17) which faces the total reflection surface (21) to cover the through-hole (18) of the optical element (16), wherein the light diffusing portion (17) comprises a rear surface (25) facing the total reflection surface (21), and a front surface (26) located opposite to the rear surface (25), and at least one of the rear surface (25) and the front surface (26) is configured to diffuse light.

3. The illumination apparatus according to claim 2,
   wherein the light diffusing portion (17) has an end face (27) which connects the outer circumferential edge of the front surface (26) and the outer circumferential edge of the rear surface (25), the end face (27) faces the outer circumferential portion of the total reflection surface (21), and a gap (30) is formed between the end face (27) and the outer circumferential portion of the total reflection surface (21) .

4. The illumination apparatus according to any one of claims 1 to 3, wherein the total reflection surface (21) is a curved surface having a point closest to the axis line, and a normal at this point running to the axis line intersects at right angles with the axis line.

5. The illumination apparatus according to claim 4, wherein a refractive index of the optical element (16) is n,

   a point located on the entrance surface on a section of the optical element (16) including the axis line is Q,
   a point in a finite interval on the total reflection surface (21) is P, and
   a critical angle $\theta_C$ of the total reflection surface (21) is:

   [Expression 1]

   $$\theta_C = \sin^{-1}\left(\frac{1}{n}\right)$$

   in which case an angle $\theta$ defined by a normal vector extending in a direction to depart from the axis line at the point P and a vector PQ connecting the point P to the point Q satisfies the following relation:

   [Expression 2]

   $$\theta \geq \theta_C$$

6. The illumination apparatus according to claim 5, wherein the distance from the point Q to the axis line is $r_Q$,

   the area of the light emitting surface (14) is C, and
   an radius $r_C$ of the circular light emitting surface (14) equal in area to the light emitting surface is:

   [Expression 3]

   $$r_C = \sqrt{\frac{C}{\pi}}$$

   in which case the distance $r_Q$ satisfies the following relation:

   [Expression 4]

   $$r_Q \leq \frac{r_C}{\sqrt{2}}$$

7. The illumination apparatus according to any one of claims 1 to 6, wherein the exit surface (20) of the optical element (16) has such a shape that a normal running to the axis line at a given point on the exit surface (20) intersects with a surface including the light emitting surface (14).

8. The illumination apparatus according to any one of claims 5 to 7, wherein when the distance from the axis line at a point at which the distance to the axis line is the shortest on the entrance surface is l, l is:

[Expression 5]

$$\frac{l}{r_Q} > \left(1 - \frac{1}{\exp(\theta_C \tan \theta_C)\cos \theta_C}\right)$$

9. The illumination apparatus according to any one of claims 1 to 8, wherein a depressed portion (23) which surrounds the light emitting surface (14) is provided in the entrance surface (19) of the optical element (16).

10. The illumination apparatus according to one of claims 1 to 9, further comprising a body (2) to which the light source (4) and the optical element (16) are attached, and a globe (61) provided in the body (2) to cover at least the optical element (16).

11. The illumination apparatus according to one of claims 1 to 10, further comprising a heat release portion having a support portion (71) to which the light source (4) is thermally connected, and the optical element (16) has an extended portion which surrounds the support portion of the heat release portion and which continues with the exit surface (20).

**Patentansprüche**

1. Beleuchtungsvorrichtung, umfassend:

eine Lichtquelle (4) mit einer lichtemittierenden Oberfläche (14), die konfiguriert ist zum Emittieren von Licht in einer Oberflächenform unter Verwendung eines lichtemittierenden Halbleiterelements; und
ein optisches Element (16), das eine in Bezug auf eine Achsenlinie (O1) rotationssymmetrische Form entlang einer Richtung aufweist, die durch den Schwerpunkt (O') der lichtemittierenden Oberfläche (14) verläuft, um sich rechtwinklig mit der lichtemittierenden Oberfläche (14) zu schneiden, und welche das Licht der Lichtquelle (4) transmittiert,
wobei das optische Element (16) umfasst
ein Durchgangsloch (18), das entlang der Achsenlinie (O1) vorgesehen ist,
eine Eintrittsfläche (19), die der lichtemittierenden Oberfläche (14) zugewandt ist und in der das Durchgangsloch offen ist,
eine Austrittsfläche (20), die sich in einer Richtung von der Lichtquelle (4) weg erstreckt, um die Achsenlinie von der äußeren Umfangskante der Eintrittsfläche (19) zu umgeben, und
eine Totalreflexionsfläche (21), die die distale Kante der Austrittsfläche (20) und die innere Umfangskante der Eintrittsfläche (19), die dem Durchgangsloch zugewandt ist, verbindet, um das Durchgangsloch (18) zu definieren, wobei die Totalreflexionsfläche (21) so konfiguriert ist, dass sie das Licht der Lichtquelle (4), das von der Eintrittsfläche (19) in das optische Element (16) eingetreten ist, in Richtung der Austrittsfläche (20) total reflektiert, **dadurch gekennzeichnet, dass** sich die Austrittsfläche (20) der Achsenlinie (O1) nähert, wenn sie sich von der Lichtquelle (4) entfernt.

2. Beleuchtungsvorrichtung nach Anspruch 1, weiter umfassend einen lichtstreuenden Abschnitt (17), der der Totalreflexionsfläche (21) zugewandt ist, um das Durchgangsloch (18) des optischen Elements (16) abzudecken, wobei der lichtstreuende Abschnitt (17) eine hintere Oberfläche (25), die der Totalreflexionsfläche (21) zugewandt ist, und eine vordere Oberfläche (26) umfasst, die der hinteren Oberfläche (25) gegenüberliegt, und mindestens eine der hinteren Oberfläche (25) und der vorderen Oberfläche (26) so konfiguriert ist, dass sie Licht streut.

3. Beleuchtungsvorrichtung nach Anspruch 2, wobei der lichtstreuende Abschnitt (17) eine Endfläche (27) aufweist, die die äußere Umfangskante der vorderen Oberfläche (26) und die äußere Umfangskante der hinteren Oberfläche (25) verbindet, wobei die Endfläche (27) dem äußeren Umfangsabschnitt der Totalreflexionsfläche (21) zugewandt ist und ein Spalt (30) zwischen der Endfläche (27) und dem äußeren Umfangsabschnitt der Totalreflexionsfläche (21) gebildet ist.

4. Beleuchtungsvorrichtung nach einem der Ansprüche 1 bis 3, wobei die Totalreflexionsfläche (21) eine gekrümmte Oberfläche ist, die einen Punkt aufweist, der der Achsenlinie am nächsten liegt, und eine an diesem Punkt zur Achsenlinie verlaufende Normale die Achsenlinie rechtwinklig schneidet.

5. Beleuchtungsvorrichtung nach Anspruch 4, wobei der Brechungsindex des optischen Elements (16) n ist,

ein Punkt, der sich auf der Eintrittsfläche auf einem Abschnitt des die Achsenlinie einschließenden optischen Elements (16) befindet Q ist,
ein Punkt in einem begrenzten Intervall auf der Totalreflexionsfläche (21) P ist, und
ein kritischer Winkel $\theta_c$ der Totalreflexionsfläche (21) ist:

[Ausdruck 1]

$$\theta_C = \sin^{-1}\left(\frac{1}{n}\right)$$

in welchem Fall ein Winkel $\theta$, definiert ist durch einen Normalenvektor, der sich in einer von der Achsenlinie im Punkt P abweichenden Richtung erstreckt und einen den Punkt P mit dem Punkt Q verbindenden Vektor PQ, die folgende Beziehung erfüllt:

[Ausdruck 2]

$$\theta \geq \theta_C$$

6. Beleuchtungsvorrichtung nach Anspruch 5, wobei der Abstand zwischen dem Punkt Q und der Achsenlinie $r_Q$ ist,

die Fläche der Lichtaustrittsfläche (14) C ist, und
ein Radius rc der kreisförmigen Lichtaustrittsfläche (14) flächengleich mit der Lichtaustrittsfläche ist:

[Ausdruck 3]

$$r_C = \sqrt{\frac{C}{\pi}}$$

in welchem Fall der Abstand $r_Q$ die folgende Beziehung erfüllt:

[Ausdruck 4]

$$r_Q \leq \frac{r_C}{\sqrt{2}}$$

7. Beleuchtungsvorrichtung nach einem der Ansprüche 1 bis 6, wobei die Austrittsfläche (20) des optischen Elements (16) so geformt ist, dass eine zur Achsenlinie verlaufende Normale an einem bestimmten Punkt der Austrittsfläche (20) eine Oberfläche schneidet, die die lichtemittierende Fläche (14) einschließt.

8. Beleuchtungsvorrichtung nach einem der Ansprüche 5 bis 7, wobei, wenn der Abstand von der Achsenlinie an einem Punkt, an dem der Abstand zur Achsenlinie auf der Eintrittsfläche am kürzesten ist, l ist, wobei l ist:

[Ausdruck 5]

$$\frac{l}{r_Q} > \left(1 - \frac{1}{\exp(\theta_C \tan\theta_C)\cos\theta_C}\right)$$

9. Beleuchtungsvorrichtung nach einem der Ansprüche 1 bis 8, wobei ein Vertiefungsabschnitt (23), welcher die Lichtaustrittsfläche (14) umgibt, in der Eintrittsfläche (19) des optischen Elements (16) vorgesehen ist.

10. Beleuchtungsvorrichtung nach einem der Ansprüche 1 bis 9, weiter umfassend einen Körper (2), an dem die Lichtquelle (4) und das optische Element (16) angebracht sind, sowie eine in dem Körper (2) vorgesehene Kugel (61), die zumindest das optische Element (16) abdeckt.

11. Beleuchtungsvorrichtung nach einem der Ansprüche 1 bis 10, weiter umfassend einen Wärmeabgabeabschnitt mit einem Stützabschnitt (71), mit dem die Lichtquelle (4) thermisch verbunden ist, und das optische Element (16) einen verlängerten Abschnitt aufweist, der den Stützabschnitt des Wärmeabgabeabschnitts umgibt und der sich in die Austrittsfläche (20) fortsetzt.

**Revendications**

1. Appareil d'éclairage comprenant :

   une source (4) de lumière ayant une surface électroluminescente (14) configurée pour émettre de la lumière dans une forme de surface à l'aide d'un élément électroluminescent à semi-conducteur ; et
   un élément optique (16) qui a une forme symétrique en rotation par rapport à une ligne axiale (01) le long d'une direction qui passe par le centre de gravité (O') de la surface électroluminescente (14) pour couper à angles droits la surface électroluminescente (14) et qui transmet la lumière de la source (4) de lumière,
   dans lequel l'élément optique (16) comprend
   un trou traversant (18) ménagé le long de la ligne axiale (O1),
   une surface (19) d'entrée qui fait face à la surface électroluminescente (14) et dans laquelle le trou traversant est ouvert,
   une surface (20) de sortie s'étendant dans une direction pour s'éloigner de la source (4) de lumière pour entourer la ligne axiale à partir du bord circonférentiel externe de la surface (19) d'entrée et
   une surface de réflexion totale (21) qui relie le bord distal de la surface (20) de sortie et le bord circonférentiel interne de la surface (19) d'entrée faisant face au trou traversant pour définir le trou traversant (18), la surface de réflexion totale (21) étant configurée pour réfléchir totalement, vers la surface (20) de sortie, la lumière de la source (4) de lumière qui est entrée dans l'élément optique (16) à partir de la surface (19) d'entrée **caractérisée en ce que** la surface (20) de sortie se rapproche de la ligne axiale (01) à mesure qu'elle s'éloigne de la source (4) de lumière.

2. Appareil d'éclairage selon la revendication 1, comprenant en outre une partie (17) de diffusion de lumière qui fait face à la surface de réflexion totale (21) pour recouvrir le trou traversant (18) de l'élément optique (16), dans lequel la partie (17) de diffusion de lumière comprend une surface arrière (25) faisant face à la surface de réflexion totale (21), et une surface avant (26) située à l'opposé de la surface arrière (25), et au moins l'une de la surface arrière (25) et de la surface avant (26) est configurée pour diffuser de la lumière.

3. Appareil d'éclairage selon la revendication 2, dans lequel la partie (17) de diffusion de lumière a une face (27) d'extrémité qui relie le bord circonférentiel externe de la surface avant (26) et le bord circonférentiel externe de la surface arrière (25), la face (27) d'extrémité fait face à la partie circonférentielle externe de la surface de réflexion totale (21), et un espace (30) est formé entre la face (27) d'extrémité et la partie circonférentielle externe de la surface de réflexion totale (21).

4. Appareil d'éclairage selon l'une quelconque des revendications 1 à 3, dans lequel la surface de réflexion totale (21) est une surface incurvée ayant un point le plus proche de la ligne axiale, et une normale à ce point s'étendant jusqu'à la ligne axiale coupe à angles droits la ligne axiale.

5. Appareil d'éclairage selon la revendication 4, dans lequel un indice de réfraction de l'élément optique (16) est n,

   un point situé sur la surface d'entrée sur une section de l'élément optique (16) comprenant la ligne axiale est Q,
   un point dans un intervalle fini sur la surface de réflexion totale (21) est P, et
   un angle critique $\theta c$ de la surface de réflexion totale (21) est :

[Expression 1]

$$\theta_C = \sin^{-1}\left(\frac{1}{n}\right)$$

auquel cas un angle θ défini par un vecteur normal s'étendant dans une direction pour s'éloigner de la ligne axiale au point P et un vecteur PQ reliant le point P au point Q satisfait la relation suivante :

[Expression 2]

$$\theta \geq \theta_C$$

6. Appareil d'éclairage selon la revendication 5, dans lequel la distance du point Q à la ligne axiale est $r_Q$,

la superficie de la surface électroluminescente (14) est C, et
un rayon $r_C$ de la surface électroluminescente circulaire (14) d'une superficie équivalente à celle de la surface électroluminescente est :

[Expression 3]

$$r_C = \sqrt{\frac{C}{\pi}}$$

auquel cas la distance $r_Q$ satisfait la relation suivante :

[Expression 4]

$$r_Q \leq \frac{r_C}{\sqrt{2}}$$

7. Appareil d'éclairage selon l'une quelconque des revendications 1 à 6, dans lequel la surface (20) de sortie de l'élément optique (16) a une forme telle qu'une normale s'étendant jusqu'à la ligne axiale à un point donné sur la surface (20) de sortie coupe une surface comprenant la surface électroluminescente (14).

8. Appareil d'éclairage selon l'une quelconque des revendications 5 à 7, dans lequel lorsque la distance de la ligne axiale à un point auquel la distance par rapport à la ligne axiale est la plus courte sur la surface d'entrée est l, l est :

[Expression 5]

$$\frac{l}{r_Q} > \left(1 - \frac{1}{\exp(\theta_C \tan \theta_C)\cos \theta_C}\right)$$

9. Appareil d'éclairage selon l'une quelconque des revendications 1 à 8, dans lequel une partie renfoncée (23) qui entoure la surface électroluminescente (14) est prévue dans la surface (19) d'entrée de l'élément optique (16).

10. Appareil d'éclairage selon l'une des revendications 1 à 9, comprenant en outre un corps (2) auquel la source (4) de lumière et l'élément optique (16) sont fixés, et un globe (61) prévu dans le corps (2) pour recouvrir au moins l'élément optique (16).

11. Appareil d'éclairage selon l'une des revendications 1 à 10, comprenant en outre une partie de libération de chaleur ayant une partie (71) de support à laquelle la source (4) de lumière est reliée thermiquement, et l'élément optique (16) a une partie étendue qui entoure la partie de support de la partie de libération de chaleur et qui se prolonge jusqu'à la surface (20) de sortie.

F I G. 1

F I G. 2

EP 2 998 639 B1

F I G. 3

EP 2 998 639 B1

FIG. 4

FIG. 5

Refractive index

FIG. 6

FIG. 7

F I G. 8

F I G. 9

EP 2 998 639 B1

F I G. 10

FIG. 11

**REFERENCES CITED IN THE DESCRIPTION**

**Patent documents cited in the description**

- JP 4660654 B
- WO 2013022040 A1
- WO 2012124637 A1
- CN 103032729 A